# EUROPEAN PATENT APPLICATION

(11) **EP 3 945 471 A1**
(43) Date of publication of application: **02.02.2022**
(21) Application number: 20188083.8
(22) Date of filing: 28.07.2020
(51) Int. Cl.: G06N 3/063, G06N 5/04, G06N 5/00, G06N 3/08

(54) **METHOD FOR AUTOMATED DETERMINATION OF A MODEL COMPRESSION TECHNIQUE FOR COMPRESSION OF AN ARTIFICIAL INTELLIGENCE-BASED MODEL**

(71) Applicant: Siemens Aktiengesellschaft, 80333 München (DE)
(72) Inventor: Lavrik, Vladimir, 63303 Dreieich (DE); Meng, Yang Qiao, Beijing, P.R.China, 100102 (CN); Paulitsch, Christoph, 76199 Karlsruhe (DE)

(57) **Abstract**

The present invention relates to a computerimplemented method for automated determination of a model compression technique for compression of an artificial intelligence-based model, a corresponding computer program product and a corresponding apparatus of an industrial automation environment, with automated provisioning of a set of model compression techniques using an expert rule, determining metrics for the model compression techniques of the set of model compression techniques based on weighted constraints and selecting an optimized model compression technique based on the determined metrics.

## Description

The present invention relates to a computerimplemented method for automated determination of a model compression technique for a compression of an artificial intelligence-based model, a corresponding computer program product and a corresponding apparatus of an industrial automation environment.

One of the key concepts for industrial scenarios of the next generation is Industrial Internet of Things combined with a new generation of analytical methods which are based on employing artificial intelligence (AI) and methods related thereto. For these concepts, industrial equipment installed in factories, manufacturing or processing plants or production sites are equipped with all kinds of suitable sensors to collect a variety of different types of data. Collected data are transmitted via either wired or wireless connections for further analysis. The analysis of the data is performed with a usage of either classical approaches or AI methods. Based on the data analysis a plant operator or a service provider can perform optimization of processes or installations in order to, for example, decrease the cost of a production and to decrease an energy consumption.

For the analysis of data specific models are known. Moreover, these models are deployed in an operating environment. In order to reduce processing effort and associated energy consumption models should be compressed.

In conventional approaches, certain devices in an industrial environment are selectively monitored, data are collected in a nonsystematic manner and ad hoc analysis of these data are performed. In other approaches, devices are monitored with a usage of predefined thresholds employing human expertise in order to regularly check the performance of the analysis.

Recently data analytics processes like the CRossInduStryProcess for Data Mining (CRISP DM) have been proposed that describe how data collection, data preparation, model building and deployment on devices connected to the model building stage might be carried out. However, it does not consider model compression.

The Chinese patent application CN109978144A describes a kind of a model compression method and system that comprises the steps of determining a compression ratio, a first and a second compression processing.

The Chinese patent application CN110163367A proposes a model compression method using a compression algorithm component and an algorithm hyper parameter value. A candidate compression result is obtained, and a hyper parameter value is adjusted.

The international publication WO2016180457A1 shows estimating a set of physical parameters, iteratively inverting an equation to minimize an error between simulated data and measured data and to provide an estimated set of physical parameters. It thereby discloses applying a compression operator to the model vector representing the set of physical parameters to reduce the number of free variables.

The patent application CN109002889A discloses a kind of adaptive iteration formula convolutional neural networks model compression methods and it includes: to be pre-processed to training data, convolutional neural networks are trained with training data, select the model that optimal models are compressed as needs, model is compressed with adaptive iteration formula convolutional neural networks model compression method, compressed model is assessed, the model that optimal models are completed as compression is selected.

The patent application CN108053034A shows a kind of model parameter processing method, device, electronic equipment and storage mediums. Wherein, the described method includes the corresponding parameter sets to be compressed of the pending model are obtained, the parameter sets to be compressed include multiple model parameters, according to the model parameter in the parameter sets to be compressed, determine Compression Strategies.

The patent application CN109961147A describes a specific model compression technique based on Q-learning.

It is one object of this disclosure to provide a method and corresponding computer program product and apparatus to improve the usage of artificial intelligence-based models in environments with limited processing capacity.

These objects are addressed by the subject matter of the independent claims. Advantageous embodiments are proposed in the dependent claims.

The invention relates to a computerimplemented method for automated determination of a model compression technique for compression of an artificial intelligence-based model, the method comprising automated provisioning of a set of model compression techniques using an expert rule, determining metrics for the model compression techniques of the set of model compression techniques based on weighted constraints and selecting an optimized model compression technique based on the determined metrics.

As artificial intelligence-based model, short AI-models, machine learning or deep learning-based models or models based on neural networks might be used. Moreover, tree-based models with decision trees as a basis might be used according to the application the AI-model is to be used for.

As a set of model compression techniques, for example, the following techniques might be used or combinations thereof:
- Parameter pruning & sharing
- Quantization & binarization
- Designed structural matrix
- Low-rank factorization & sparsity
- Transfer/compact conv filters
- Knowledge distillation.

Those exemplary techniques are applicable to a large range of data analytics models. There might be other techniques applicable.

The expert rule assigns to an AI-based model a specific set of model compression techniques. This rule-based selection procedure for example relies on expert knowledge that is reflected in a taxonomy. With this taxonomy, also conditions of data analytics models or of available data can be considered for provisioning of the set of model compression techniques.

The metrics are determined for the model compression techniques which are promising candidates due to the expert rule-based selection. In particular, respective metrics are determined for each of the model compression techniques. The metrics characterize compressed models, which have been compressed with the model compression techniques in terms of satisfying one or more constraints. The metrics reflect a value of the compressed model and therefore of the model compression technique used.

The metric is determined based on weighed constraints. The value characterizing the compressed model in terms of satisfying one or more constraints can be determined with giving specific constraints higher priority. Those high priority constraints influence the value more than others rated with a lower priority.

The metric is for example the result of a test within a test phase. In a test phase, the metrics for all different compression techniques are determined by generating a compressed model for each of the model compression techniques and the results are compared to choose the best model compression technique.

The metric is for example defined with respect to various constraints. For example, a metric is defined by considering two, three or more specific constraints. The value that reflects the model compression techniques is then a value which provides information about the quality of a technique in terms of the constraints. Metrics might be tested with applying different constraints or different combinations of constraints of a group of constraints.

The metric varies depending on the respective weights that are assigned to a respective constraint. Those weights are for example chosen by a user or automatically depending on a type of analysis, the AI-based model is used for.

The metrics are customized in terms of which constraints are considered and which weights are assigned to the respective constraints. The customization depends for example on the type of analysis or an industrial environment or hardware restrictions of the industrial system the AI-based model is used in or devices the AI-based model is deployed on.

Metrics are for example two- or three-dimensional quantities or vectors and might have different values in the different dimensions. The different dimensions are for example defined by different functions of constraints or functions of different constraints and /or different weights of the different constraints.

The selection is, for example, performed by evaluating the highest metric or the metric having the highest value, in particular by choosing the compression technique which resuits in highest values in most of the metric dimensions or by choosing the metric best fulfilling the most important constraint or having the highest value in the most important contraint.

In an advantageous way, the proposed method does not rely on a consecutive order of training the model, compressing the model and deploying it on an intended system and then having to restart the process after model monitoring has found model errors.

In contrast, candidate model compression techniques are tested before deployment in a systematic and automated manner to efficiently use system resources.

With the proposed method, starting from an AI task, which can be solved with an AI-based model, and having industrial and hardware requirements at hand the best suited AI model compression technique which resolves the AI task with respect to constraints specified by industrial and hardware requirements is found.

The workflow for analyzing and selecting a model compression technique is automated so that in comparison with existing manual selection procedures time effort to select a model compression method is reduced.

The selection method enables the usage of customized metrics for the selection process, which results in a large flexibility and customizability to different devices, where the compressed AI model, which has been compressed with the selected technique, is intended to be used and also to different industrial environments and use cases.

Finding the optimal model compression technique with the proposed method reduces the energy consumption of an AI-based model being deployed. Selecting an optimal technique to compress the AI model and using the compressed model enables a deployment with optimal computational effort. In particular, less parameters of the model cause less computational effort and this leads to less energy consumption.

According to an embodiment, the constraints reflect hardware or software constraints of an executing system for execution of a compressed model of the artificial intelligence-based model compressed with the model compression technique. With the constraints reflecting hardware or software requirement, also the metrics determined dependent on the constraints describe the hardware and software constraints.

For example, the constraints are one or more of a speed compression ratio, a memory compression ratio, a hardware memory allocation, a hardware acceleration, a required inference time, a dimensionality reduction requirement, an accuracy requirement, a docker container characteristic, a software license availability, a software license version and a training data necessity.

According to an embodiment, the expert rule relates an artificial intelligence-based model to the model compression techniques of the set of model compression techniques based on condition of the artificial intelligence-based model or data needed for training or executing the artificial intelligence-based model. For example, the rule assigns techniques based on conditions like characteristics of the AI model, e.g. availability of a Softmax output layer, of a physical model, of a circ model, physical decomposition, or characteristics of the training data, e.g. availability of original training data. The expert rule for example is provided on a test environment for the process of selecting the compression technique or is provided on the system the compressed model is to be deployed, in particular during the test phase. This step is for example performed, when a certain set of compression techniques is to be chosen in order to run the method. The expert rule for example addresses one or more AI based models and for example comprises a set of compression techniques per AI-based model.

According to an embodiment, the metrics are functions in dependence of respective values representing respective constraints, and wherein the respective values are weighted with respective weighting factors. The values representing respective constraints are for example numerical or continuous or for example ordinal or discrete.

According to an embodiment, the functions describe linear, exponential, polynomial, fitted or fuzzy relations. This enables a flexible mapping of real interdependencies of different constraints. For example, a first function mirrors a linear interdependency of an accuracy and an inference time for one user, meaning for a first deployment on a first system, and a second function mirrors a non-linear interdependency for a second operation type.

According to an embodiment, the functions vary depending on the constraints. Dependent on the how many constraints are considered, the functions are built correspondingly.

According to an embodiment, the metrics are relative to a reference metric of the artificial intelligence-based model. The reference metric might be influenced by the most important constraints: for example, it might be accuracy of a compressed AI-based model. Metrics should be chosen having this reference as a corner stone.

According to an embodiment, the constraints for building the metrics depend on hardware and software framework conditions of the system or device the artificial intelligence-based model is used in. For example, the constraints of interest depend on whether there are restrictions like memory or software license restrictions. Moreover, the constraints considered for the metric might be dependent on a desired complexity of the function underlying the metric, which also influences the complexity of an optional following optimization method.

According to an embodiment, the respective weighting factor for the respective constraint of the constraints depend on an analysis type the artificial intelligence-based model is used in. For example, weights for the different constraints or their respective values are given by a user or operation types, e.g. depending on whether a postmortem analysis or an online analysis is to be performed with the AI model.

According to an embodiment, the step of selecting an optimized model compression technique based on the determined metrics further comprises optimizing the metrics for each of the model compression techniques over the constraints, in particular over respective values representing the respective constraints and moreover in particular over parameters of the respective model compression techniques influencing the respective value representing the respective constraint.

The optimization is, for example, carried out over different compression techniques, in particular over all compression techniques of the set of model compression techniques, and the associated metric spaces. For example, an optimization space is built where the metrics value of every model compression technique which is tested in the selection procedure, is maximized.

Optimization is done for example towards the constraint's values. The optimization can be performed with a function having the constraints values as variables.

According to an embodiment, for optimizing the metrics for each of the model compression techniques over the constraints, at least one constraint or more constraints are fixed. For the optimization, some of the constraints are for example hard constraints and are therefore fixed. Especially constraints concerning the availability of hardware or software resources are fixed and can't be varied to optimize the metric.

According to an embodiment, for optimizing the metrics for each of the model compression techniques over the constraints, an optimization method is used, in particular but not limited to a gradient descent method, a genetic algorithm-based method or a machine learning classification method.

The invention moreover relates to a computerimplemented method for generation of a compressed artificial intelligence-based model by using a model compression technique determined according to one of the preceding claims. The selected model compression technique is applied to the AI based model and results in a compressed artificial intelligence-based model. Using the selection method described above reduces the effort in finding a suited compression method or technique. Moreover, using the optimization method described above enables finding an optimized compression technique. Applying the compressed AI-based model, which has been compressed with the selected and in particular optimized model compression technique, enables execution of an AI task with optimized computational effort and/or optimized energy consumption.

The invention moreover relates to a computer program product comprising instructions which, when executed by a computer, cause the computer to carry out the method according to one of the preceding claims. The computer might be a processor and might be connectable to a human machine interface. The computer program product may be embodied as a function, as a routine, as a program code or as an executable object, in particular stored on a storage device.

The invention moreover relates to an apparatus of an automation environment, in particular an edge device of an industrial automation environment, with a logic component adapted to execute a method for automated determination of a model compression technique for compression of an artificial intelligence-based model, the method comprising an automated provision of a set of model compression techniques using an expert rule, a determination of metrics for the model compression techniques of the set of model compression techniques based on weighted constraints and a selection of an optimized model compression technique based on the determined metrics.

The apparatus might advantageously be part of an industrial automation environment. The industrial automation environment in particular has limited processing capacity. With the provided apparatus, the flexibility and efficiency of deploying offline trained AI models on different edge devices, e.g. Technology Module Neural Processing Unit, Industrial Edge, etc. is improved.

The logic unit might be integrated into a control unit.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

In the following different aspects of the present invention are described in more detail with reference to the accompanying drawings.
- Figure 1: A schematic representation of a diagram illustrating the method for automated determination of a model compression technique according to a first embodiment of the invention;
- Figure 2: a schematic representation of a diagram illustrating the method for optimizing metrics according to a second embodiment of the invention;
- Figure 3: a schematic representation of a block diagram illustrating the method for automated determination of a model compression technique showing input and output according to a third embodiment of the invention.

The first embodiment refers to the testing phase of the determination method. According to the first embodiment, a deep learning-based model is used to solve an AI task of proposing a work schedule for autonomous guided vehicles, e.g. for providing an order of AGVs receiving goods to be transferred in an automation plant. The AI task is performed by an edge device, the edge device being connectable to a cloud environment. For example, the edge device receives AI-based models from the cloud environment. The method according to the first embodiment is run on the target device where the compressed model should be deployed. In other embodiments, the method for automated determination of a model compression technique is run in an emulated runtime environment, for example an office PC with especially created environment which emulates a target device.

Mainly three constraints are considered for this exemplary scenario, namely the hardware acceleration Me1, the inference time Me2, and the accuracy Me3 of the AI based result. In other scenarios, a variety of constraints Me1, Me2, Me3 ..., Men might be considered. Each of the constraints Me1, Me2, Me3 are weighted with weighting factors a-f. The number of constraints might be much higher in real scenarios. Especially, the number or sort of constraints might be chosen in accordance with constraints that are considered for the calculation of a metric of the uncompressed model.

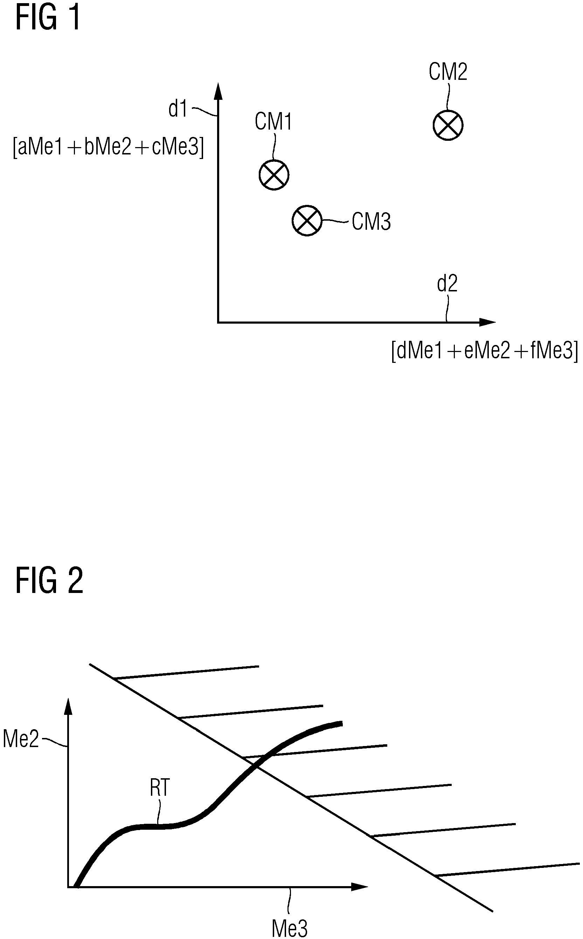

Figure 1 shows a diagram with two axes as two dimensions, a first dimension d1 and a second dimension d2. The metrics CM1, CM2, CM3 are metrics determined for three different compression methods, that are promising candidates for compression of the deep learning model.

The first dimension d1 indicates a first value of the metric CM1 and this value is determined by usage of a function of the constraints and weighting factors for each constraint. For example, the first-dimension value is calculated by CM1_d1=a^{∗}Me1 + b^{∗}Me2 + c^{∗}Me3. The value of the metric CM2 in the second dimension d2 for example is calculated by CM1_d2=d^{∗}Me1 + e^{∗}Me2 + f^{∗}Me3. The weights are assigned by a user or by the underlying operation type, e.g. whether a postmortem- or an online-operation is intended. In this example, a user 1 would give values a, b, c and user 2 would give values d, e, f, wherein the online use of user 1 leads to higher weights for the constraints of hardware acceleration and inference time, whereas a user 2 weights the accuracy Me3 higher. With this, each metric CM1, CM2, Cm3 is calculated based on requirements of the AI project.

Weighting factors a-f might be tuned depending on what is in focus. For example, he metrics values are calculated by CM_1/2=0.1^{∗}Me1 + 0.1^{∗}Me2 + 0.8^{∗}Me3. Here, there is a stress on keeping accuracy of a model as high as possible. The CPU utilization and memory are treated equally.

In the example illustrated in figure 1, the compression technique leading to the compressed model with the metric CM2 would be chosen since for both users the values are higher than for the other two compression techniques. The decision between CM1 and CM3 is not as easy to identify so that they are put in a common cluster and a following optimization step might give more insights.

Also, in cases where there is a complex relation between metrics, e.g. if accuracy increase inference time increases twofold for one compression technique but non-linearly for other compression techniques, or there are constraints on licenses, the optimum value needs is chosen by performing an optimization step.

An optimization is, for example, performed for every compression technique that has been determined with the expert rule. Advantageously, a database or any other type of data storage is populated in order to generalize it in future with the intention to run a machine learning algorithm on it.

According to the second embodiment, an optimization is performed over the constraints inference time Me2 and accuracy Me3. Hard constraints concerning the availability of a software license, for example whether there is a license available or not and if yes, which software license type is available, e.g. MIT, Google or Apache license types, are also considered for the optimization and result in a restricted constraints space for the other constraints.

Figure 2 illustrates a graph indicating an optimized result for constraint values, meaning to what extend constraints can be considered, e.g. how fast a compression can be executed while still achieving an appropriate accuracy. The space excluded from the optimization due to the hard constraints is illustrated in figure 2 by the hatched area. Combinations of constraint values lying on the curve RT can be chosen for determining an optimal compression technique and deploying an optimal compressed model.

Such a kind of curve as illustrated in figure 2 is determined for every compression technique. All different curves can be compared with each other to choose the best curve. Optimizing each of such curve delivers the best metric and therefore the best compression technique. Mathematically spoken, from a set of functions CMi = gi(f1(Me1), f2(Me2), ...) the optimal CMi is chosen.

According to the third embodiment, the following input data I are provided: a type of analysis, a strategy, an AI model, dataset, model compression technique expert selection rule, constraints. The following is generated as output data O: compressed model, optimal compression technique.

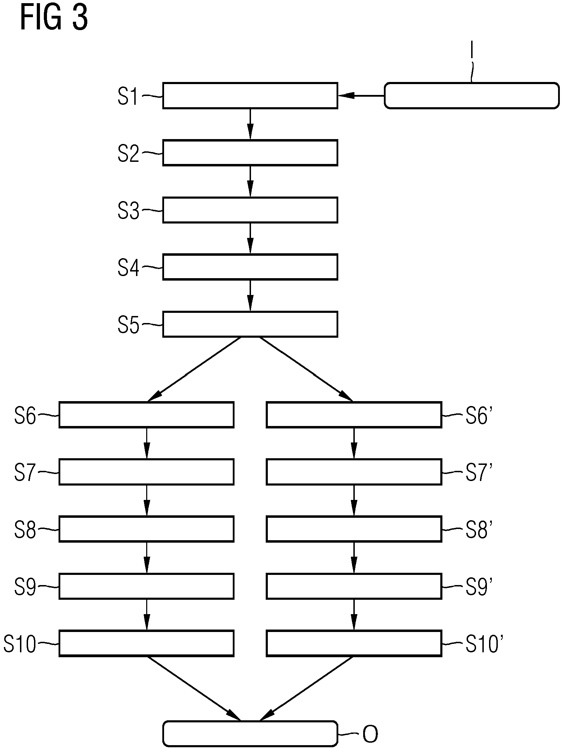

Figure 3 illustrated the input data I and output data O as well as the following steps:
S1: Preprocess the dataset with strategy. Well known methods for preprocessing data for the usage in AI algorithms might be used.
S2: Split dataset to test and train datasets.
S3: Train a machine learning model on train data from step S2.
S4: Test machine learning model on test data from step S2 with respect to constraints.
S5: Choose a set of model compression techniques with an expert rule, for example like according to the first embodiment.
S6: if type of analysis == postmortem:
for every model compression technique in the set do:
S7: Compress model with a compressed model technique.
S8: Test model with respect to constraints and obtain metrics determined in constraints, for example like according to the first embodiment.
S9: save model compression technique metrics from step S8 and compressed model.
S10: optimize model compression technique with respect to constraints with a higher weight on accuracy and confidence metrics.
S6': elif type of analysis == online:
for every model compression technique do:
S7': Compress model with a compressed model technique.
S8': Test model with respect to constraints and obtain metrics determined in constraints.
S9': Save model compression technique metrics from step S8' and compressed model.
S10': Optimize model compression technique with respect to constraints with a higher weight on hardware acceleration and inference time.

Although the present invention has been described in accordance with preferred embodiments, it is obvious for the person skilled in the art that modifications are possible in all embodiments.

## Claims

1. Computerimplemented method for automated determination of a model compression technique (CT) for a compression of an artificial intelligence-based model, the method comprising:
- automated provisioning of a set of model compression techniques (CT1, CT2, CT3) using an expert rule;
- determining metrics (CM1, CM2, CM3) for the model compression techniques (CT1, CT2, CT3) of the set of model compression techniques based on weighted constraints (Mel, Me2, Me3) ;
- selecting an optimized model compression technique (CT) based on the determined metrics (CM1, CM2, CM3).

2. Method according to claim 1, wherein the constraints (Mel, Me2, Me3) reflect hardware or software constraints of an executing system for execution of a compressed model of the artificial intelligence-based model compressed with the model compression technique.

3. Method according to one of the preceding claims, wherein the expert rule relates an artificial intelligence-based model to the model compression techniques (CT1, CT2, CT3) of the set of model compression techniques based on condition of the artificial intelligence-based model or data needed for training or executing the artificial intelligence-based model.

4. Method according to one of the preceding claims, wherein the metrics are functions in dependence of respective values representing respective constraints (Mel, Me2, Me3), and wherein the respective values are weighted with respective weighting factors (a, b, c, d, e, f).

5. Method according to claim 4, wherein the functions describe linear, exponential, polynomial, fitted or fuzzy relations.

6. Method according to claim 4 or 5, wherein the functions vary depending on the constraints (Mel, Me2, Me3).

7. Method according to one of the preceding claims, wherein the metrics (CM1, CM2, CM3) are relative to a reference metric of the artificial intelligence-based model.

8. Method according to one of the preceding claims, wherein the constraints (Mel, Me2, Me3) for building the metrics depend on hardware and software framework conditions of the system or device the artificial intelligence-based model is used in.

9. Method according to one of the preceding claims, wherein a respective weighting factor (a) for the respective constraint (Me1) of the constraints (Mel, Me2, Me3) depend on an analysis type the artificial intelligence-based model is used in.

10. Method according to one of the preceding claims, wherein the step of selecting an optimized model compression technique (CT) based on the determined metrics (CM1, CM2, CM3) further comprises optimizing the metrics (CM1, CM2, CM3) for each of the model compression techniques (CT1, CT2, CT3) over the constraints (Mel, Me2, Me3), in particular over respective values representing the respective constraints and moreover in particular over parameters of the respective model compression techniques influencing the respective value representing the respective constraint.

11. Method according to claim 10, wherein for optimizing the metrics (CM1, CM2, CM3) for each of the model compression techniques (CT1, CT2, CT3) over the constraints (Mel, Me2, Me3), at least one constraint or more constraints are fixed.

12. Method according to claim 10 or 11, wherein for optimizing the metrics (CM1, CM2, CM3) for each of the model compression techniques (CT1, CT2, CT3) over the constraints (Mel, Me2, Me3), an optimization method is used, in particular a gradient descent method, a genetic algorithm based method or a machine learning classification method.

13. Computerimplemented method for generation of a compressed artificial intelligence-based model by using a model compression technique (CT) determined according to one of the preceding claims.

14. Computer program product comprising instructions which, when executed by a computer, cause the computer to carry out the method according to one of the preceding claims.

15. Apparatus of an automation environment, in particular an edge device of an industrial automation environment, with a logic component adapted to execute a method for automated determination of a model compression technique (CT) for compression of an artificial intelligence-based model, the method comprising an automated provision of a set of model compression techniques (CT1, CT2, CT3) using an expert rule, a determination of metrics (CM1, CM2, CM3) for the model compression techniques (CT1, CT2, CT3) of the set of model compression techniques based on weighted constraints (Mel, Me2, Me3) and a selection of an optimized model compression technique (CT) based on the determined metrics (CM1, CM2, CM3).
